# EUROPEAN PATENT APPLICATION

(11) **EP 3 185 230 A1**
(43) Date of publication of application: **28.06.2017**
(21) Application number: 15834619.7
(22) Date of filing: 10.08.2015
(51) Int. Cl.: G08C 25/00, G01M 13/02, G01M 13/04, G08C 15/06

(54) **PORTABLE DIAGNOSIS DATA MEASUREMENT TRANSMISSION DEVICE**

(30) Priority: 18.08.2014 JP 2014165699
(71) Applicant: NTN Corporation, Osaka-shi, Osaka 550-0003 (JP)
(72) Inventor: SUZUKI, Katsuyoshi, Kuwana-shi Mie 511-8678 (JP)
(74) Representative: Maikowski & Ninnemann Patentanwälte Partnerschaft mbB
(86) International application number: PCT/JP2015/072689
(87) International publication number: WO 2016/027725

(57) **Abstract**

Provided is a portable diagnosis data measurement transmission device that assuredly allows a server to perform malfunction diagnosis based on measurement data without influence of a communication status. The portable diagnosis data measurement transmission device (1) includes: a portable information terminal (2) connected to a server (6) via a communication line network (7); a physical quantity measuring equipment (3) configured to measure a physical quantity of a diagnosis object (4) including a mechanical component; and an A/D converter (5). Whether transmission of a block of measurement data has been completed is confirmed. The measurement data is temporarily stored until completion of the transmission is confirmed. The measurement data is caused to be retransmitted when a communication status shifts to a set allowable state.

## Description

### CROSS REFERENCE TO THE RELATED APPLICATION

This application is based on and claims Convention priority to Japanese patent application No. 2014-165699, filed August 18, 2014, the entire disclosure of which is herein incorporated by reference as a part of this application.

### BACKGROUND OF THE INVENTION

### (Field of the Invention)

The present invention relates to a portable diagnosis data measurement transmission device that uses a portable information terminal such as a smartphone to measure data for causing a data processing server to perform a diagnosis or the like for various diagnosis objects such as a rolling bearing and a constant velocity ball joint and to transmit the data via the internet or the like.

### (Description of Related Art)

For malfunction diagnosis of a rolling bearing or the like, acceleration data measured by a vibration sensor is generally used. In addition, a system has been proposed in which acceleration data measured by a vibration sensor is transmitted from a portable information terminal to a server, malfunction diagnosis is performed by using high functionality of the server, and a diagnosis result is transmitted back to the portable information terminal (e.g., Patent Document 1).

### [Related Document]

### [Patent Document]

[Patent Document 1] JP Laid-open Patent Publication No. 2013-228352

### SUMMARY OF THE INVENTION

Combining a portable information terminal and a data processing server connected thereto via the internet simplifies software of the portable information terminal. Thus, a diagnosis system including the portable information terminal and the server has an advantage in that the diagnosis system is less likely to be influenced by the performance difference of the portable information terminal. However, it is necessary to transmit measurement data to the server, and thus the diagnosis system is influenced by a processing speed of the portable information terminal and a communication status of the portable information terminal such as a use environment and a radio wave status.

In the conventional device, when the communication status is poor, the portable information terminal automatically stops transmission and reception and waits for an instruction operation by an operator. Thereafter, when the operator confirms that the communication status returns to normal, the operator performs an operation for an instruction to perform data transmission to the server. After processing within the server, the portable information terminal receives a diagnosis result obtained through the processing.

There is a possibility that the portable information terminal performs measurement on diagnosis objects at various places or in various environments. Therefore, the portable information terminal may attempt to transmit measurement data in a state where the communication status is poor as described above.

Measured data is generally transmitted while measurement is performed. Thus, interruption of transmission makes the server fail to correct measurement data even if the transmission is restarted when the communication status returns to normal. Accordingly, the accuracy of a diagnosis decreases.

An object of the present invention is to provide a portable diagnosis data measurement transmission device that assuredly allows a server to perform malfunction diagnosis based on measurement data without influence of a communication status.

Hereinafter, for easy understanding, a description will be given with reference to the reference numerals in embodiments.

A portable diagnosis data measurement transmission device 1 according to an aspect of the present invention includes: a portable information terminal 2 connected to a server 6 via a wide-area communication line network 7; a physical quantity measuring equipment 3 configured to measure a physical quantity of a diagnosis object 4, the diagnosis object including a mechanical component; and an A/D converter 5 configured to A/D convert measurement data corresponding to the physical quantity measured by the physical quantity measuring equipment 3. The portable information terminal includes: a transmission function section 12a configured to transmit the measurement data that has been A/D converted by the A/D converter 5, to the server 6 for a diagnosis of the diagnosis object 4; a transmission confirmation module 21 configured to confirm whether transmission of a block of the measurement data performed by the transmission function section 12a has been completed; a data storage section 17a configured to temporarily store the A/D converted measurement data, until completion of the transmission is confirmed by the transmission confirmation module 21; a communication status monitoring module 24 configured to constantly (i.e., every very short time interval) monitor a communication status; and a retransmission module 22 configured to cause the transmission function section 12a to retransmit the measurement data stored in the data storage section 17a when the communication status monitored by the communication status monitoring module 24 shifts to a set allowable state, if the completion of the transmission has not been confirmed by the transmission confirmation module 21. For example, the communication status monitoring module 24 monitors a communication status based on radio wave intensity and/or a power source, and determines whether the communication status is in a communication allowable state. In the physical quantity of the diagnosis object, a change attributed to the diagnosis object appears as a change quantity.

According to this configuration, the transmission confirmation module 21 confirms whether transmission of the block of the measurement data has been completed, and the measurement data is temporarily stored in the data storage section 17a until completion of the transmission is confirmed. Thus, the measurement data required by the server for malfunction diagnosis can be assuredly provided to the server. Even when the communication status is poor so that the measurement data cannot be transmitted to the server 6, an operation for the next measurement can be performed. The communication status monitoring module 24 constantly monitors the communication status. When the communication status shifts to the set allowable state by, for example, returning to normal, the retransmission module 22 automatically transmits the measurement data stored in the data storage section 17a, to the server 6. Thus, the server 6 can sequentially perform data processing that is processing of a diagnosis, and can transmit the result of the data processing back to the portable information terminal 2, etc.

As described above, as a result, transmission of the block of the measurement data, that is, the grouped measurement data, can be completed without influence of the communication status and without interruption, and a diagnosis can be performed by the server 6 with high accuracy. Thus, even when the communication status is poor, a diagnosis of the next diagnosis object 4 or the like can be performed.

The "block of the measurement data" or "grouped measurement data" is, for example, measurement data required for a diagnosis such as malfunction diagnosis, and is preferably minimum measurement data required for a diagnosis. A period for acquiring the block of measurement data is set and stored in the portable information terminal 2 in advance. This period is managed by a timer (not shown) or the like as appropriate. The block of measurement data is regarded as one set, and the data storage section 17a is configured to be able to store multiple sets of measurement data. However, when it is made possible to make operation settings in accordance with the basic performance of the portable information terminal 2, a memory capacity, or the like, the performance of the portable information terminal 2 can be sufficiently exerted.

According to a preferred embodiment, the portable information terminal 2 may include a diagnosis result display output module 23 configured to display a result of the diagnosis of the diagnosis object 4 on a screen display device 10. The diagnosis result is transmitted from the server 6.

The portable information terminal 2 that transmits the measurement data may be dedicated for measurement and transmission, and the diagnosis result may be displayed on another portable information terminal 2 or the like. However, in general, the portable information terminal 2 has both of a function of measurement and transmission and a function of display of a diagnosis result, and thus when both functions are used, a diagnosis result can be recognized at a site where measurement is being made, so that the usability is enhanced.

According to a preferred embodiment, the portable information terminal may include a communication status responding transmission halt module 20 configured to halt start of transmission of the measurement data or stop the transmission when the communication status monitored by the communication status monitoring module 24 falls into a preset poor status. The transmission is performed by the transmission function section 12a.

By halting start of transmission of the measurement data or stopping the transmission when a communication status based on the radio wave intensity or the power source is monitored, and the communication status falls into the poor status, it is possible to avoid such wasted transmission that: transmission is performed in a situation where there is a high possibility of interruption of communication; and eventually communication is interrupted.

According to a preferred embodiment, the portable information terminal may include a collective transmission section 19a configured to store the measurement data that has been A/D converted by the A/D converter 5, in the data storage section 17a, and to cause the transmission function section 12a to collectively transmit the stored measurement data to the server 6.

In the case that the communication performance of the portable information terminal 2 is high, and/or that the volume of the block of measurement data is small, there is a low possibility of interruption of communication, and thus efficient transmission can be performed by collectively transmitting the measurement data.

According to an alternative embodiment, the portable information terminal may include a division transmission section 19b configured to store the measurement data that has been A/D converted by the A/D converter 5, in the data storage section 17a, to divide the stored measurement data into segments, and to cause the transmission function section 12a to transmit individually the segments of the measurement data to the server 6.

In the case that the communication performance of the portable information terminal 2 is low, and/or that the volume of the block of measurement data is large, there is a high possibility of interruption of communication. A possibility of interruption of communication in the process of transmission of each segment is decreased by dividing and transmitting the measurement data, and the segments of the measurement data only need to be transmitted even in retransmission, so that the measurement data can be efficiently and assuredly transmitted as a result.

According to a preferred embodiment, the physical quantity measuring equipment 3 may include an equipment configured to measure at least one of acceleration of vibration, sound, temperature, acoustic emission waves (hereinafter, sometimes referred to as "AE waves"), and rotation speed.

Acceleration of vibration is most frequently used for malfunction diagnosis, since malfunction diagnosis of the diagnosis object 4 such as a rolling bearing can be performed with high accuracy and a malfunction site is easily identified. Sound or temperature is sometimes used for malfunction diagnosis, and accuracy of a diagnosis improves particularly when sound or temperature is used in combination with acceleration of vibration. Only with acceleration data, estimation of remaining life cannot be performed, but an internal crack of the diagnosis object 4 can be detected on the basis of AE waves. Estimation of the remaining life of the diagnosis object 4 can be performed by estimating the degree of progress of the internal crack on the basis of AE waves. It is possible to perform malfunction diagnosis of the diagnosis object 4 only on the basis of AE waves, and such malfunction diagnosis can be performed in a viewpoint different from that with acceleration data. Regarding rotation speed, it is possible to perform malfunction diagnosis only on the basis of the rotation speed, depending on the diagnosis object 4. In the case of a rolling bearing or the like, malfunction diagnosis or the like can be performed with high accuracy by using acceleration and rotation speed in combination.

According to a preferred embodiment, the physical quantity measuring equipment 3 may include a microphone configured to measure sound, and the microphone may be built in the portable information terminal 2.

In the portable information terminal 2 having a telephone function such as a smartphone, the microphone and the A/D conversion section 15 for A/D conversion for the microphone are built. Also on the basis of sound measured with the built-in microphone, malfunction diagnosis of the diagnosis object 4 can be performed with a certain level of accuracy. Thus, in the case where the built-in microphone is used, an external pickup and The A/D converter 5 become unnecessary, and measurement and transmission of diagnosis data can be performed only by the portable information terminal 2.

According to a preferred embodiment, the data storage section 17a may be provided outside the portable information terminal 2. For example, the data storage section 17a may be provided within a housing that is separate from the portable information terminal 2 and shared by the A/D converter 5. Alternatively, the data storage section 17a may be a storage attachable to or detachable from the main body of the portable information terminal 2, for example, a semiconductor memory chip such as an SD card, a USB memory, or the like. Since the volume of the measurement data for malfunction diagnosis or the like is large, the external data storage section 17a is used, whereby the portable information terminal 2 can be used even if the portable information terminal 2 has a small data storage capacity.

According to a preferred embodiment, the portable information terminal 2 may be a general-purpose portable information terminal 2 including an OS 9 capable of installing an application program, and the transmission confirmation module 21 and the retransmission module 22 may be implemented by installing a dedicated application program into the portable information terminal 2.

The portable information terminal 2 may be a special purpose machine initially designed to be dedicated for measurement. However, a general smartphone or tablet type terminal can be used as the portable information terminal 2 for measurement by, for example, installing a dedicated application program thereinto by the user.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is an explanatory diagram of a schematic configuration of a portable diagnosis data measurement transmission device 1 according to a first embodiment of the present invention; and
Fig. 2 is a block diagram of the schematic configuration of the portable diagnosis data measurement transmission device 1 in Fig. 1.

### DESCRIPTION OF EMBODIMENTS

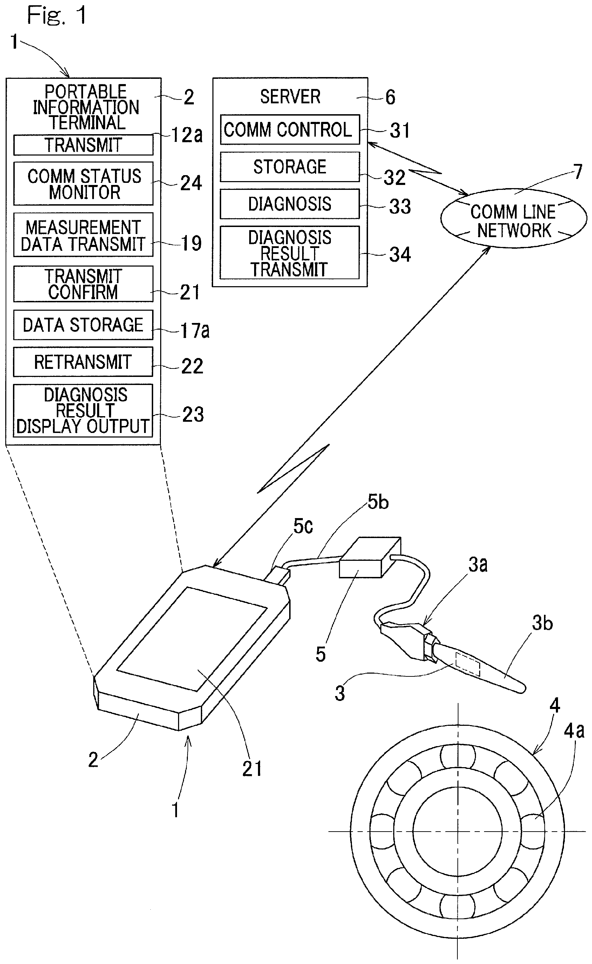

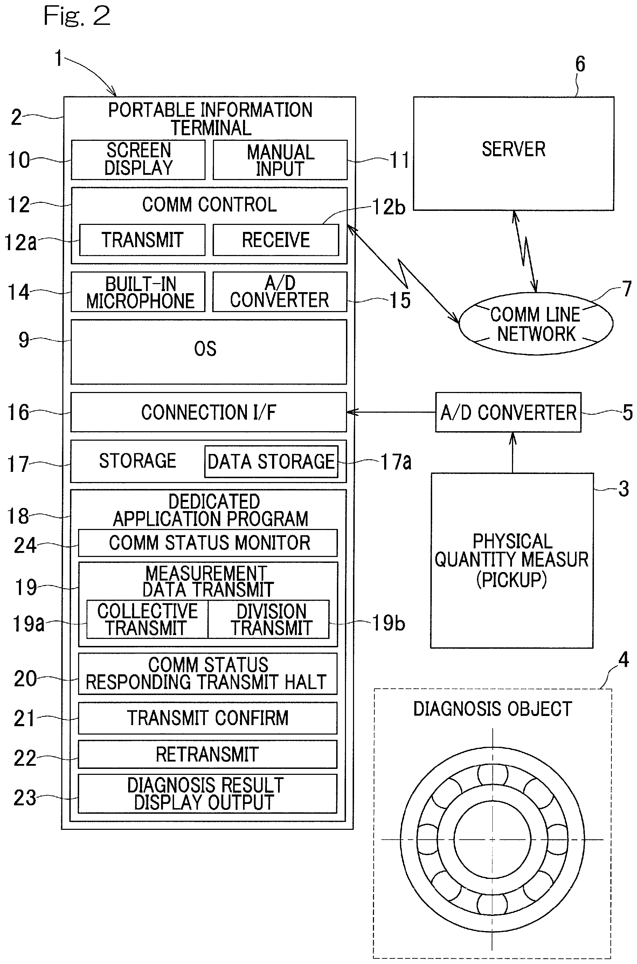

A portable diagnosis data measurement transmission device (a portable data measurement transmission device for diagnosis) according to a first embodiment of the present invention will be described with reference to Figs. 1 and 2. The portable diagnosis data measurement transmission device 1 and a server 6 connected thereto via a wide-area communication line network 7 form a diagnosis system for a mechanical component. The portable diagnosis data measurement transmission device 1 includes a physical quantity measuring equipment 3, an A/D converter 5, and a portable information terminal 2. The wide-area communication line network 7 includes a line network such as a telephone line network via which information communication is performed, for example, the internet or the like. Via the line network 7 mobile communication can be performed. A diagnosis object 4 may be a mechanical component including rolling elements 4a, such as a rolling bearing, a constant velocity ball joint, or the like.

The portable information terminal 2 may be a portable information terminal such as a smartphone, a tablet, a notebook-sized personal computer, or the like, does not necessarily need to have a telephone function, but is information processing equipment that is capable of connecting to the server 6 via the wide-area communication line network 7 such as a telephone network, the internet, or the like and includes: an OS (operation program) 9 (Fig. 2) capable of downloading and installing an application program; and a screen display device 21 such as a liquid crystal display device or the like which displays an image. The smartphone refers to a terminal having a telephone function in the above definition of the portable information terminal.

The physical quantity measuring equipment 3 measures a physical quantity of the diagnosis object 4. The physical quantity measuring equipment 3 includes a sensor element 3a that detects at least one of acceleration of vibration, sound, temperature, acoustic emission waves, and a rotation speed each of which is the physical quantity. In other words, the sensor element 3a is, for example, a vibration sensor, a microphone, a temperature sensor, an AE sensor, or a rotation sensor. In the illustrated example, the physical quantity measuring equipment 3 also include a pickup 3b, which is provided to the sensor element 3a. One pickup 3b may be provided to a plurality of sensor elements 3a to enable measurement of a set of multiple types of physical quantities, for example, a set of acceleration of vibration and sound, a set of acceleration of vibration and AE waves, or a set of acceleration of vibration and temperature. In addition, multiple types of a physical quantity measuring equipment 3 that measure different types of physical quantities, respectively, may be prepared and exchanged with each other to be applied to the A/D converter 5.

The A/D converter 5 A/D converts measurement data that is an analog signal corresponding to the physical quantity measured by the physical quantity measuring equipment 3, into digital data. In this embodiment, the A/D converter 5 is composed of a device including a housing that is separate from the portable information terminal 2. The A/D converter 5 is insertion-connected to the portable information terminal 2 via a cable 5b having a terminal 5c that complies with a standard such as the micro USB standard (one of USB standards which are connection interface standards). The connection between The A/D converter 5 and the physical quantity measuring equipment 3 may be fixed or be detachable. Alternatively, The A/D converter 5 and the portable information terminal 2 may wirelessly transmit and receive data therebetween.

The physical quantity measuring equipment 3 may not be provided outside the portable information terminal 2. For example, in the case where the portable information terminal 2 includes a built-in microphone 14, the built-in microphone 14 may be used as a physical quantity measuring equipment for measuring data for a diagnosis. In this case, output of the microphone 14 built in the portable information terminal 2 is A/D converted by an A/D conversion section 15 built in the portable information terminal 2.

The server 6 includes a communication control module 31 that controls communication using the communication line network 7, a storage 32, a diagnosis module 33, and a diagnosis result transmission module 34. The server 6 may be composed of a single computer, or of a plurality of computers that are connected to each other via a network. The storage 32 stores measurement data transmitted from the portable information terminal 2, specifications of the diagnosis object 4 for a diagnosis thereof, a threshold for malfunction determination, etc.

The diagnosis module 33 performs a diagnosis of the diagnosis object 4 by using the measurement data that is transmitted from the portable information terminal 2 and stored in the storage 32. The diagnosis includes determination as to whether malfunction has occurred in the diagnosis object 4, estimation of the remaining life of the diagnosis object 4, etc. The diagnosis module 33 also performs data processing such as various types of data analysis that is preprocessing for a diagnosis. Items and a method of the diagnosis are set as appropriate in accordance with the type of measurement data (the type of the physical quantity) measured by the physical quantity measuring equipment 3, for example, acceleration of vibration, sound, temperature, AE waves, rotation speed, and the like. For example, in the case where the physical quantity is acceleration of vibration, the diagnosis module 33 performs frequency analysis of the measurement data and performs a diagnosis by using the result of the analysis. Alternatively, in the case where the physical quantity is AE waves, the diagnosis module 33 performs envelope processing and performs a diagnosis by using the result of the processing.

The diagnosis result transmission module 34 transmits the result of the diagnosis from the diagnosis module 33, back to the portable information terminal 2 that has transmitted the measurement data for the diagnosis. The diagnosis result transmission module 34 may transmit the result to a portable information terminal (not shown) for which an address different from that of the portable information terminal 2 that has transmitted the measurement data is registered, a computer for management, or the like. The diagnosis result is transmitted back to the portable information terminal 2 together with supplementary information (e.g., the date of the measurement, the measured diagnosis object 4, an identification sign for identifying the measurement data) transmitted from the portable information terminal 2 together with the measurement data.

The portable information terminal 2 will be specifically described. The portable information terminal 2 is a smartphone or the like as described above, and includes, as basic components thereof, a communication control module 12 that controls communication via the communication line network 7, a screen display device 10 such as a liquid crystal panel which outputs an image, a manual input device 11 such as a touch panel, a keyboard, and a mouse which is operated by an operator, the built-in microphone 14, the A/D conversion section 15 that performs A/D conversion of data of sound recorded with the microphone 14, an OS (operation system) 9 that is capable of downloading and installing an application program, a connection interface 16, and a storage 17. The connection interface 16 has a terminal (not shown) that complies with the USB standard or the like and to which the terminal 5c of The A/D converter 5 can be inserted and connected. Instead of the connection interface 16 being used, The A/D converter 5 and the portable information terminal 2 may use wireless communication means such as the Bluetooth, WiFi, or the like.

In the portable information terminal 2 having the above basic functions, by installing a dedicated application program 18, a communication status monitoring module 24, a measurement data transmission module 19, a communication status responding transmission halt module 20, a transmission confirmation module 21, a retransmission module 22, and a diagnosis result display output module 23 are implemented in the portable information terminal 2 and thus executable by a processor of the portable information terminal 2. In addition, a part of the storage 17 serves as a data storage section 17a.

The communication status monitoring module 24 constantly monitors a communication status based on a radio wave status and/or a power source (e.g., the remaining battery level). In general, a portable information terminal is equipped with a monitoring device for monitoring a radio wave status such as radio wave intensity as standard. Thus, the communication status monitoring module 24 may add, to the function of the standard, a function to determine whether the level of the radio wave status is equal to or higher than an allowable level that is set as appropriate for transmission by the portable diagnosis data measurement transmission device, by using the monitoring device for the radio wave status. Alternatively, in a preferred embodiment, a device for monitoring not only the radio wave status but also the status of the power source such as the remaining battery level is provided, resulting in monitoring a communication status on the basis of both the radio wave status and information of the power source. For example, the communication status monitoring module 24 determines whether the remaining battery level, which is the power source, is sufficient for transmitting a block of the measurement data.

The measurement data transmission module 19 transmits measurement data that is measured by the physical quantity measuring equipment 3, subjected to A/D conversion, and stored in the data storage section 17a, to the server 6 via a transmission function section 12a of the communication control module 12. In this embodiment, the transmission module 19 includes a collective transmission section 19a and a division transmission section 19b. The collective transmission section 19a causes the transmission function section 12a to collectively transmit a block of the measurement data stored in the data storage section 17a, to the server 6. The "block of the measurement data" is, for example, measurement data required for diagnosis such as malfunction diagnosis, and is preferably minimum measurement data required for diagnosis. A period for acquiring the block of the measurement data is set and stored in the portable information terminal 2 in advance. This period is managed by a timer or the like as appropriate. The division transmission section 19b divides the block of the measurement data stored in the data storage section 17a into segments, and causes the transmission function section 12a to transmit individually the segments of the measurement data to the server 6. The collective transmission section 19a and the division transmission section 19b may be configured such that either of the collective transmission section 19a and the division transmission section 19b is selected by mode switching module (not shown) provided in the portable information terminal 2 through an input or the like from the manual input device 11, and thus the selected section is used. Alternatively, only either one of the collective transmission section 19a and the division transmission section 19b may be provided.

The transmission confirmation module 21 confirms whether transmission of the block of the measurement data by the transmission function section 12a has been completed. The transmission confirmation module 21 confirms whether transmission of the block of the measurement data has been completed, for example, on the basis of redundancy information attached to block of the measurement data stored in the data storage section 17a or data transmitted and received according to a communication protocol implemented by the communication control module 12.

The communication status responding transmission halt module 20 monitors a communication status based on the radio wave intensity or the power source. When the communication status falls into a preset poor status, the communication status responding transmission halt module 20 halts start of transmission of the measurement data by the transmission function section 12a or stops the transmission. The communication status responding transmission halt module 20 includes a communication status section (not shown) that confirms the communication status, and a communication status corresponding processing section (not shown) that performs, in accordance with a confirmation result of the communication status section, processing in which: transmission is caused to be performed when the communication status is good; and start of the transmission is halted or the transmission is stopped when the communication status is poor.

If completion of the transmission has not been confirmed by the transmission confirmation module 21, when the communication status shifts to a set allowable state for the communication status monitoring module 24 by, for example, returning to normal, the retransmission module 22 causes the transmission function section 12a to retransmit the block of measurement data stored in the data storage section 17a.

The diagnosis result display output module 23 displays the result of the diagnosis of the diagnosis object 4 transmitted from the server 6, on a screen display device 10.

Operation of the above configuration will be described with a supplement of the function of each modules. The transmission confirmation module 21 confirms whether transmission of the block of the measurement data has been completed, and the measurement data is temporarily stored in the data storage section 17a until completion of the transmission is confirmed. Thus, the measurement data required by the server for malfunction diagnosis can be assuredly provided to the server. Even when the communication status is poor so that the measurement data cannot be transmitted to the server 6, an operation for the next measurement can be performed. The communication status monitoring module 24 constantly monitors the communication status. When the communication status shifts to the set allowable state by, for example, returning to normal, the retransmission module 22 automatically transmits the measurement data stored in the data storage section 17a, to the server 6. Thus, the server 6 can sequentially perform data processing that is processing of a diagnosis, and can transmit the result of the data processing back to the portable information terminal 2, etc.

As described above, as a result, transmission of the block of the measurement data, that is, the grouped measurement data can be completed without influence of the communication status and without interruption, and a diagnosis can be performed by the server 6 with high accuracy. Thus, even when the communication status is poor, a diagnosis of the next diagnosis object 4 or the like can be performed.

The "block of the measurement data" or "grouped measurement data" is, for example, measurement data required for a diagnosis such as malfunction diagnosis, and is preferably minimum measurement data required for a diagnosis. A period for acquiring the block of measurement data is set and stored in the portable information terminal 2 in advance. This period is managed by a timer (not shown) or the like as appropriate. The block of measurement data is regarded as one set, and the data storage section 17a is configured to be able to store multiple sets of measurement data. However, when it is made possible to make operation settings in accordance with the basic performance of the portable information terminal 2, a memory capacity, or the like, the performance of the portable information terminal 2 can be sufficiently exerted.

When the communication status falls into the poor status as a result of monitoring by the communication status monitoring module 24, the communication status responding transmission halt module 20 halts start of transmission of the measurement data by the transmission function section 12a, or stops the transmission even in the process of the transmission, and causes the data storage section 17a to store the measurement data therein. Accordingly, it is possible to avoid such wasted transmission that: transmission of a lot of measurement data is performed in a situation where there is a high possibility of interruption of communication; and eventually communication is interrupted.

For transmitting measurement data, collective transmission by the collective transmission section 19a and division transmission by the division transmission section 19b may be performed alternatively on the basis of a mode that is freely selected by the operator or set in advance. The collective transmission section 19a stores measurement data subjected to A/D conversion by The A/D converter 5, in the data storage section 17 a, and causes the transmission function section 12a to collectively transmit the stored measurement data to the server 6. For example, in the case that the communication performance of the portable information terminal 2 is high, and/or that the volume of the block of measurement data is small, and/or that the communication status is very good, there is a low possibility of interruption of communication, and thus efficient transmission can be performed by collectively transmitting the measurement data, so that the communication time can be shortened.

Of the measurement data stored in the data storage section 17a, any data determined as being unnecessary by the operator is preferably deleted by an operation from the manual input device 11 or the like. Accordingly, it is possible to shorten the communication time even in the collective transmission mode.

The division transmission section 19b stores, in the data storage section 17a, measurement data subjected to A/D conversion by The A/D converter 5, divides the stored measurement data into segments, and causes the transmission function section 12a to transmit individually the segments of the measurement data to the server 6. For example, in the case that the communication performance of the portable information terminal 2 is low, and/or that the volume of the block of measurement data is large, and/or that the radio wave status is slightly poor, there is a high possibility of interruption of communication. A possibility of interruption of communication in the process of transmission of each segment is decreased by dividing and transmitting the measurement data, and the segments of the measurement data only need to be transmitted even in retransmission, so that the measurement data can be efficiently and assuredly transmitted as a result. The method for dividing the block of measurement data and the number of segments into which the measurement data is divided may be freely set.

The physical quantity measuring equipment 3 is a sensor that detects at least one of acceleration of vibration, sound, temperature, acoustic emission waves, and rotation speed. The physical quantity measuring equipment 3 may include a vibration sensor, a microphone, a temperature sensor, an AE sensor, or a rotation sensor.

Acceleration of vibration is most frequently used for malfunction diagnosis, since malfunction diagnosis of the diagnosis object 4 such as a rolling bearing can be performed with high accuracy and a malfunction site is easily identified. Sound or temperature is sometimes used for malfunction diagnosis, and accuracy of a diagnosis improves particularly when sound or temperature is used in combination with acceleration of vibration. Only with acceleration data, estimation of remaining life cannot be performed, but an internal crack of the diagnosis object 4 can be detected on the basis of AE waves. Estimation of the remaining life of the diagnosis object 4 can be performed by estimating the degree of progress of the internal crack on the basis of AE waves. It is possible to perform malfunction diagnosis of the diagnosis object 4 only on the basis of AE waves, and such malfunction diagnosis can be performed in a viewpoint different from that with acceleration data. Regarding rotation speed, it is possible to perform malfunction diagnosis only on the basis of the rotation speed, depending on the diagnosis object 4. In the case of a rolling bearing or the like, malfunction diagnosis or the like can be performed with high accuracy by using acceleration and rotation speed in combination.

In the case where the built-in microphone 14 is used as the physical quantity measuring equipment 3, the external pickup 3a and the A/D converter 5 become unnecessary, and measurement and transmission of diagnosis data can be performed only by the portable information terminal 2. In the portable information terminal 2 having a telephone function such as a smartphone, the microphone and the A/D conversion section 15 for A/D conversion for the microphone are built, which can be used. The built-in microphone 14 has low directivity, and thus has poor sound collecting performance or has difficulty in obtaining high sound quality. However, the built-in microphone 14 can be used sufficiently for malfunction diagnosis, depending on the intended use. For example, when a vibration sensor is used as an external physical quantity measuring equipment 3, and both measurement data of vibration and measurement data of sound by the built-in microphone 14 are transmitted, malfunction diagnosis can be performed on the basis of both the vibration and the sound without adding a physical quantity measuring equipment 3 other than the vibration sensor.

The data storage section 17a may be a storage element provided within a main body of the portable information terminal 2, or may be provided outside the portable information terminal 2. For example, the data storage section 17a may be provided within a housing that is separate from the portable information terminal 2 and shared by the A/D converter 5. Alternatively, the data storage section 17a may be storage attachable to or detachable from the main body of the portable information terminal 2, for example, a semiconductor memory chip such as an SD card, a USB memory, or the like. Since the volume of the measurement data for malfunction diagnosis or the like is large, the external data storage section 17a is used, whereby the portable information terminal 2 can be used even if the portable information terminal 2 has a small data storage capacity.

The portable information terminal 2 may be a special purpose machine initially designed to be dedicated for measurement. However, a general smartphone or tablet type terminal can be used as the portable information terminal 2 for measurement by, for example, installing a dedicated application program thereinto by the user.

The portable information terminal 2 receives, by a reception function section 12b, the result of the diagnosis of the diagnosis object 4 transmitted from the server 6, and displays the result on the screen display device 10 by the diagnosis result display output module 23. The portable information terminal 2 that transmits the measurement data may be dedicated for measurement and transmission, and the diagnosis result may be displayed on another portable information terminal 2 or the like. However, in general, the portable information terminal 2 has both of a function of measurement and transmission and a function of display of a diagnosis result, and thus when both functions are used, a diagnosis result can be recognized at a site where measurement is being made, so that the usability is enhanced.

The present invention is not limited to the above-described embodiment, and various additions, changes, or deletions can be made without departing from the gist of the present invention.

### [Reference Numerals]

- 1: portable diagnosis data measurement transmission device
- 2: portable information terminal
- 3: physical quantity measuring equipment
- 4: diagnosis object
- 5: A/D converter
- 6: server
- 7: communication line network
- 12a: transmission function section
- 15: A/D conversion section
- 17a: data storage section
- 21: transmission confirmation module
- 22: retransmission module

## Claims

1. A portable diagnosis data measurement transmission device comprising:
a portable information terminal connected to a server via a wide-area communication line network;
a physical quantity measuring equipment configured to measure a physical quantity of a diagnosis object, the diagnosis object including a mechanical component; and
an A/D converter configured to A/D convert measurement data corresponding to the physical quantity measured by the physical quantity measuring equipment, wherein
the portable information terminal includes:
a transmission function section configured to transmit the measurement data that has been A/D converted by the A/D converter, to the server for a diagnosis of the diagnosis object;
a transmission confirmation module configured to confirm whether transmission of a block of the measurement data performed by the transmission function section has been completed;
a data storage section configured to temporarily store the A/D converted measurement data, until completion of the transmission is confirmed by the transmission confirmation module;
a communication status monitoring module configured to constantly monitor a communication status; and
a retransmission module configured to cause the transmission function section to retransmit the measurement data stored in the data storage section when the communication status monitored by the communication status monitoring module shifts to a set allowable state, if the completion of the transmission has not been confirmed by the transmission confirmation module.

2. The portable diagnosis data measurement transmission device as claimed in claim 1, wherein the portable information terminal includes a diagnosis result display output module configured to display a result of the diagnosis of the diagnosis object on a screen display device, the diagnosis result being transmitted from the server.

3. The portable diagnosis data measurement transmission device as claimed in claim 1 or 2, wherein the portable information terminal includes a communication status responding transmission halt module configured to halt start of transmission of the measurement data or stop the transmission when the communication status monitored by the communication status monitoring module falls into a preset poor status, the transmission being performed by the transmission function section.

4. The portable diagnosis data measurement transmission device as claimed in any one of claims 1 to 3, wherein the portable information terminal includes a collective transmission section configured to store the measurement data that has been A/D converted by the A/D converter, in the data storage section, and to cause the transmission function section to collectively transmit the stored measurement data to the server.

5. The portable diagnosis data measurement transmission device as claimed in any one of claims 1 to 3, wherein the portable information terminal includes a division transmission section configured to store the measurement data that has been A/D converted by the A/D converter, in the data storage section, to divide the stored measurement data into segments, and to cause the transmission function section to transmit individually the segments of the measurement data to the server.

6. The portable diagnosis data measurement transmission device as claimed in any one of claims 1 to 5, wherein the physical quantity measuring equipment includes an equipment configured to measure at least one of acceleration of vibration, sound, temperature, acoustic emission waves, and rotation speed.

7. The portable diagnosis data measurement transmission device as claimed in any one of claims 1 to 6, wherein the physical quantity measuring equipment includes a microphone configured to measure sound, and the microphone is built in the portable information terminal.

8. The portable diagnosis data measurement transmission device as claimed in any one of claims 1 to 7, wherein the data storage section is provided outside the portable information terminal.

9. The portable diagnosis data measurement transmission device as claimed in any one of claims 1 to 8, wherein the portable information terminal is a general-purpose portable information terminal including an OS capable of installing an application program, and the transmission confirmation module and the retransmission module are implemented by installing a dedicated application program into the portable information terminal.
